# FASCICULE DE BREVET EUROPEEN

(11) **EP 2 810 876 B1**
(45) Date de publication et mention de la délivrance du brevet: **20.07.2016**
(21) Numéro de dépôt: 14171563.1
(22) Date de dépôt: 06.06.2014
(51) Int. Cl.: B64G 1/26, B64G 1/10, B64G 1/24, B64G 1/40

(54) **Système de propulsion en quatre modules pour contrôle d'orbite et contrôle d'attitude de satellite**
Viermodulares Antriebssystem für Orbit- und Fluglageregelung eines Satelliten
Four-modular propulsion system for orbit and attitude control of a satellite

(30) Priorité: 07.06.2013 FR 1301303
(43) Date de publication de la demande: 10.12.2014
(73) Titulaire: Thales, 92200 Neuilly Sur Seine (FR)
(72) Inventeur: Celerier, Bruno, 31100 TOULOUSE (FR)
(74) Mandataire: Collet, Alain

(56) Documents cités:
- EP-A1- 0 568 209
- EP-A2- 0 937 644
- WO-A1-2009/076448
- WO-A1-2012/156642
- FR-A1- 2 626 318
- US-A- 3 314 609
- US-B1- 6 565 043

## Description

La présente invention concerne le domaine des systèmes de contrôle d'orbite et le contrôle d'attitude de satellite, et plus particulièrement l'architecture des systèmes de propulsion embarqués pour le contrôle d'orbite de satellites géostationnaires de télécommunications.

Pour permettre l'utilisation des divers instruments de mission d'un satellite, tels que des systèmes de télécommunications, il convient de pouvoir contrôler la position et l'orientation du satellite en orbite. Pour cela, des systèmes de contrôle sont mis en oeuvre pour maintenir d'une part l'orientation du satellite par rapport à la terre, c'est le contrôle d'attitude, et d'autre part sa position en orbite par rapport à une position idéale souhaitée, c'est le contrôle d'orbite. Par exemple dans le cas des satellites géostationnaires, le contrôle d'orbite cherche à limiter l'inclinaison par rapport au plan équatorial, à limiter l'excentricité de l'orbite, et à limiter la dérive de la position longitudinale du satellite par rapport à la terre. Pour cela, des propulseurs sont positionnés en divers emplacements sur le satellite pour corriger la trajectoire à intervalle plus ou moins proche en appliquant une force sur le satellite. Ces opérations de maintien à poste nécessitent de pouvoir disposer d'une réserve de carburant suffisante tout au long de la vie du satellite.

Un satellite est mis en orbite par la combinaison d'un véhicule spatial lanceur et de ses propres systèmes de propulsion. Le lanceur transporte et libère le satellite sur une première orbite terrestre dite de transfert, dont le perigée est généralement bas ; une fois sur cette première orbite, un système de propulsion du satellite prend le relais pour transporter le satellite jusqu'à son orbite finale. Généralement, ce transfert est réalisé au moyen d'un propulseur satellite principal PSP consommant un carburant chimique de type ergol ou propergol, délivrant une poussée de forte puissance permettant d'atteindre rapidement l'orbite finale.

Une fois mis en station, plusieurs propulseurs secondaires de plus faibles puissances assurent le maintien en position du satellite sur l'orbite. Pour cela, des propulseurs chimiques à ergol ou des propulseurs électriques peuvent être utilisés. Dans un propulseur électrique, de type propulseur à plasma, ou propulseur à ions, des atomes de xénon sont ionisés par collision avec des électrons, créant des ions xénons. La poussée est générée lorsque les ions xénons chargés sont accélérés hors du propulseur par un champ électromagnétique. Bien que coûteux et de masse initiale importante, l'efficacité du propulseur, ou sa capacité à générer de la force par éjection de masse, aussi appelée impulsion spécifique, est sensiblement plus importante que celle des propulseurs chimiques.

Dans les systèmes connus, des propulseurs chimiques et des propulseurs électriques sont positionnés en plusieurs emplacements sur la structure du satellite pour répondre à l'ensemble des besoins de la mission, du transport de l'orbite de transfert au maintien en orbite tout au long de la vie du satellite. Les systèmes de propulsion ainsi mis en oeuvre ont pour inconvénient un coût élevé et une masse élevée, des différents propulseurs et du carburant. Ces inconvénients limitent la capacité d'embarquement de charge utile du satellite.

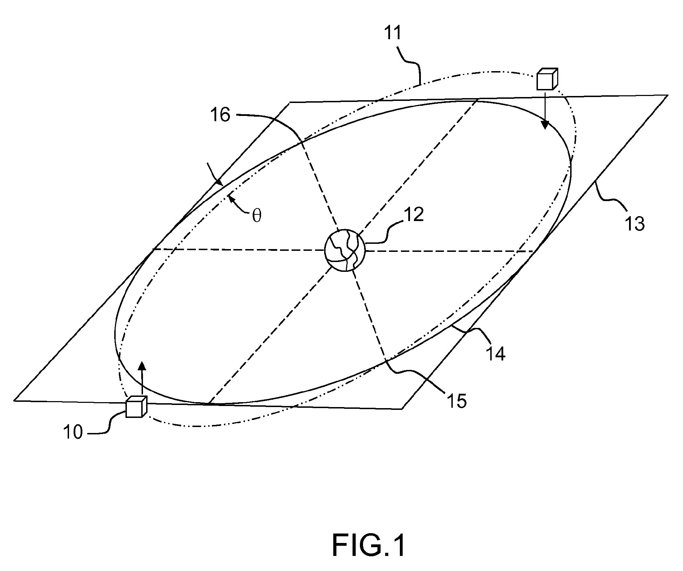

Selon l'état connu de la technique, un système de contrôle d'orbite cherche à piloter la position du satellite au travers de six paramètres orbitaux. La figure 1 représente un satellite géostationnaire 10 en orbite 11 autour de la terre 12. L'orbite 11 est inclinée d'un angle θ par rapport au plan équatorial 13 qui contient l'orbite géostationnaire idéale 14. L'orbite 11 du satellite coupe le plan équatorial 13 en deux points 15 et 16, couramment appelés noeuds orbitaux. On connaît aussi les six paramètres orbitaux utilisés pour qualifier la position d'un satellite : le demi grand-axe, l'excentricité, l'inclinaison, l'argument du noeud ascendant, l'argument du perigee, et l'anomalie vraie. Le contrôle d'orbite consiste à quantifier ces paramètres orbitaux et à réaliser les opérations nécessaires au moyen des systèmes de propulsion embarqués, pour maintenir le satellite dans une zone prédéfinie autour d'une position idéale. A titre d'exemple, pour un satellite géostationnaire, une fenêtre de dérive de plus ou moins 0,1°, représentant une largeur de presque 150km, est attribuée autour d'une position cible.

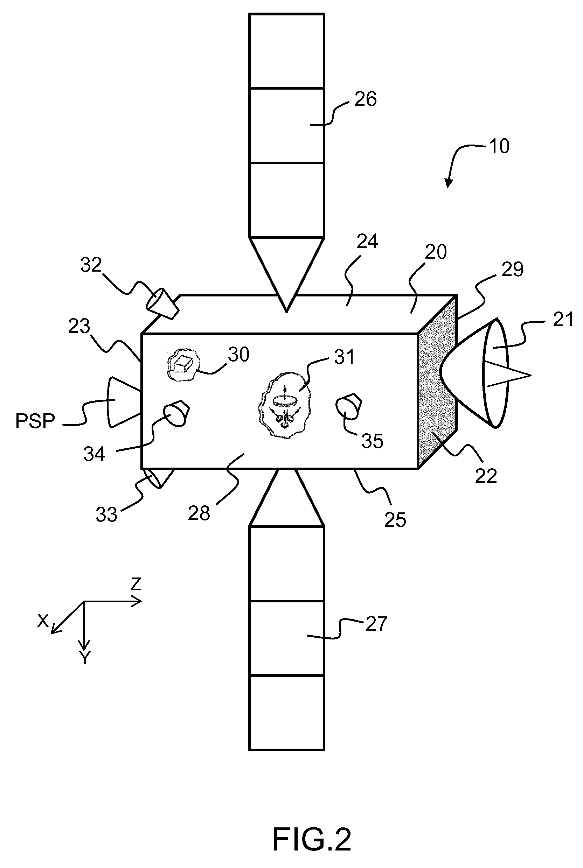

Une architecture courante d'un satellite 10, telle que représentée sur la figure 2, comprend une structure parallélépipédique 20 sur laquelle sont fixés divers dispositifs utiles au pilotage du satellite 10 et à sa mission. Des instruments de télécommunications 21 sont installés sur une face 22 dont l'orientation est maintenue en direction de la terre, communément appelée face terre. Sur une face opposée 23, communément appelée face anti-terre est positionné le propulseur satellite principal PSP qui assure notamment la poussée nécessaire au transfert de l'orbite basse vers l'orbite finale. Sur deux faces latérales opposées 24 et 25, communément appelées face Nord et face Sud, en raison de leur orientation par rapport au plan équatorial, sont positionnés deux jeux de panneaux solaires 26 et 27 permettant l'alimentation en énergie électrique des systèmes embarqués. Divers dispositifs peuvent être embarqués sur les faces latérales 28 et 29, communément appelés face Est et Ouest pour leur orientation par rapport à une longitude terrestre. Le maintien d'une orientation constante du satellite par rapport à la terre est nécessaire au bon déroulement de la mission du satellite, par exemple pour l'orientation des panneaux solaires 26 et 27 ou le pointage des systèmes de télécommunications 21 vers la terre. Cela est réalisé au moyen d'un système de contrôle d'attitude. On connaît plusieurs systèmes de contrôle d'attitude aptes à détecter et corriger les erreurs d'orientation. Ainsi, la mesure de l'orientation du satellite peut être réalisée au moyen d'un ensemble de capteur, comprenant par exemple un capteur dirigé vers la terre, positionné en face terre pour une mesure sur deux axes, tangage et roulis, par rapport à la terre et un ensemble 30 de gyroscopes pour une détection des vitesses de rotation sur trois axes. A partir de ces mesures, des corrections d'orientation du satellite autour de son centre de gravité peuvent être réalisées, par exemple au moyen d'un ensemble de roues à inertie 31 ou d'actionneurs gyroscopiques.

Un satellite équipé d'un tel système permettant le contrôle d'attitude est dit stabilisé sur trois axes. Typiquement, en contrôlant la vitesse de rotation et l'orientation des roues à inertie, on sait corriger une erreur d'orientation dans un trièdre de référence lié au satellite. Dans la suite, on appelle Z un axe dirigé vers la terre, aussi appelé axe de lacet, Y un axe perpendiculaire à l'orbite et orienté dans le sens opposé au moment cinétique de l'orbite (vers le sud pour un geostationnaire), aussi appelé axe de tangage, et X un axe formant avec Y et Z un repère orthogonal direct, aussi appelé axe de roulis qui se trouve orienté selon la vitesse dans le cas des orbites circulaires.

Pour le contrôle d'orbite, plusieurs propulseurs sont disposés sur la structure 20 du satellite 10. Un premier propulseur de forte puissance PSP, permettant d'assurer le transfert entre l'orbite terrestre initiale (après libération du lanceur) et l'orbite finale, est positionné sur la face anti-terre 23. Selon un état connu de la technique, un premier ensemble de propulseurs, comprenant par exemple deux propulseurs 32 et 33 positionnés en face Nord et en face Sud à proximité de la face anti-terre, est utilisé pour contrôler l'inclinaison. Un second ensemble de propulseurs, comme par exemple les propulseurs 34 et 35, positionné en faces Est et Ouest, est utilisé pour le contrôle de l'excentricité et la dérive. On sait aussi que le contrôle de l'inclinaison requiert de l'ordre de cinq à dix fois plus de carburant que le contrôle de l'excentricité et de la dérive. Pour cette raison, le contrôle en inclinaison est en général réalisé au moyen de propulseur à plasma, plus faiblement consommateur de carburant, tandis que les propulseurs dédiés au contrôle de l'excentricité et de la dérive sont le plus souvent à ergol chimique.

A titre d'exemple, un satellite courant de masse sèche 2500kg et permettant d'embarquer une charge utile de 900 kg, comprend un propulseur principal, deux propulseurs à plasma pour l'inclinaison et l'excentricité, et quatre propulseurs à ergol pour l'excentricité et la dérive. Typiquement, 1700kg d'ergol sont nécessaires pour le transfert initial d'orbite, et 220kg de Xenon sont nécessaires pour assurer le contrôle d'orbite du satellite pendant une durée de mission d'environ 15 ans. Ainsi, le coût et la masse des systèmes de propulsion actuels limitent la capacité à embarquer une charge utile élevée. Notons aussi que dans la plupart des systèmes connus de propulsion pour contrôle d'orbite, les différents propulseurs embarqués comprennent en réalité deux moteurs propulsifs positionnés côte à côte, pour des raisons de sécurité et de fiabilité de la mission. Cette redondance, bien connue de l'homme du métier, n'est pas représentée sur les figures mais on considère dans la suite qu'un propulseur peut être constitué d'un ou plusieurs moteurs propulsifs formant un ensemble propulsif, et dont la poussée qui peut être délivrée est identique, en orientation ou en intensité.

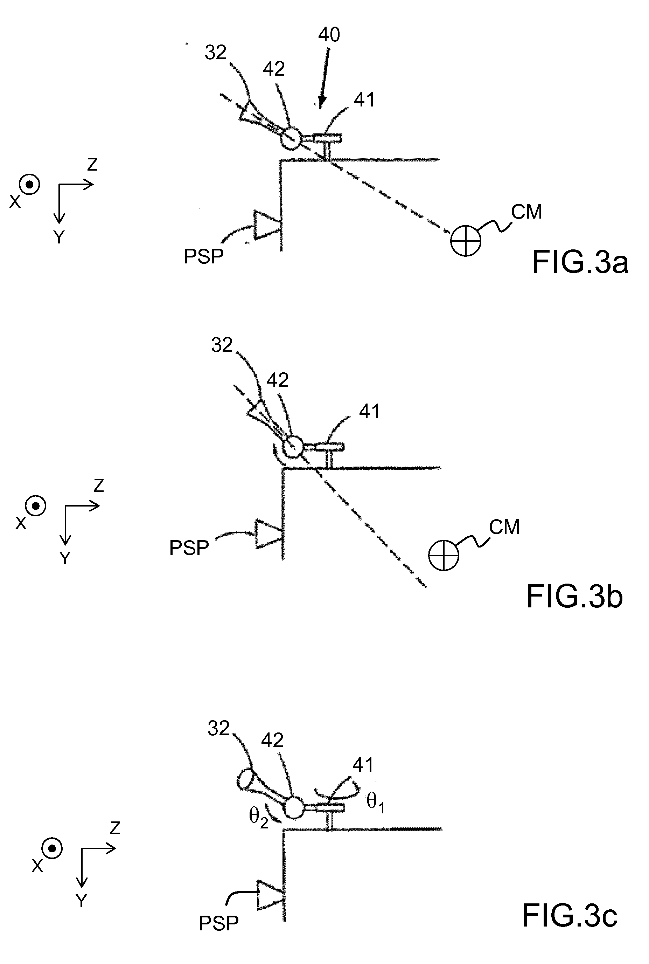

Les figures 3a, 3b et 3c illustrent le principe du contrôle d'orbite pour un satellite selon l'état connu de la technique. La structure 20 du satellite 10 est représentée en vue de côté, la face Est étant visible. Le propulseur 32 est relié à la face Nord de la structure 20 au moyen d'un mécanisme deux axes 40. Le mécanisme deux axes 40 permet la rotation du propulseur 32 par rapport à la structure 20 selon un premier axe parallèle à l'axe Y et un second axe parallèle à l'axe X. Sur les figures 3a à 3c, le mécanisme deux axes 40 est une liaison cardan réalisée au moyen d'une première liaison pivot 41 d'axe parallèle à l'axe Y et une seconde laison pivot 42 d'axe parallèle à l'axe X. Le centre de masse du satellite, situé à l'intérieur de la structure parallélépipédique 20, est référencé CM.

Sur la figure 3a, l'orientation du propulseur 32 permet de diriger la poussée du propulseur vers le centre de masse CM du satellite. Pour effectuer une manoeuvre de correction d'inclinaison, une technique connue de l'homme du métier consiste à allumer le propulseur 32 une première fois à proximité d'un noeud orbital, par exemple 15, puis le propulseur du côté opposé une seconde fois à proximité du noeud orbital opposé, 16 dans l'exemple. Ainsi, la poussée du premier allumage du propulseur 32, orientée vers le centre de masse CM, déplace le satellite dans une direction ayant une composante en Z et une composante en Y. Douze heures après, la poussée du second allumage au noeud orbital opposé, déplace le satellite dans une direction ayant une composante en Z opposée au premier allumage, et qui vient en compenser l'effet non recherché sur l'excentricité et une composante également opposée en Y mais dont les effets recherchés en inclinaison se cumulent. Ainsi, deux allumages d'intensités égales réalisés à douze heures d'intervalle à proximité des noeuds orbitaux 15 et 16 permettent d'annuler l'effet de la composante radiale pour ne conserver qu'une correction Nord-Sud. Cette procédure connue permet une correction quotidienne de l'inclinaison.

Par cette même technique il est aussi possible, en appliquant une seconde poussée d'intensité différente de la première, d'appliquer des corrections d'excentricité selon un axe perpendiculaire à la ligne joignant les deux noeuds orbitaux 15 et 16. Des techniques ont aussi été développées pour permettre des corrections d'excentricité selon un second axe, en décalant l'allumage du propulseur par rapport au noeud orbital, mais au prix d'une moins bonne efficacité du contrôle de l'inclinaison. En résumé, les systèmes connus permettent au moyen de deux systèmes de propulseur 32 et 33 d'assurer le contrôle de l'inclinaison et le contrôle de l'excentricité selon un axe sans désoptimisation du contrôle d'inclinaison, ou d'assurer le contrôle de l'inclinaison et le contrôle de l'excentricité selon deux axes avec désoptimisation du contrôle d'inclinaison. Le contrôle de la dérive ne peut être réalisé par ces deux propulseurs. Un satellite courant comprend pour cela quatre tuyères à ergol chimique positionnées sur les faces Est et Ouest du satellite.

Les systèmes de propulseur 32 et 33 sont également utiles pour gérer la quantité de mouvement des systèmes de contrôle d'attitude, comme illustré sur les figures 3b et 3c. En appliquant une poussée hors du centre de masse CM - dans un plan Y-Z sur la figure 3b et hors du plan Y-Z sur la figure 3c, on génère un couple de rotation sur le satellite - un couple de roulis sur la figure 3b et un couple de tangage et lacet sur la figure 3c. Ces deux couples peuvent être utilisés pour charger ou décharger les roues à inertie selon deux axes. Par exemple, lorsque la vitesse de rotation d'une roue à inertie atteint sa vitesse limite, on cherchera à orienter la poussée volontairement hors du centre de masse CM de façon a générer, en plus du déplacement souhaité du satellite, un couple permettant de désaturer la roue à inertie, ou plus généralement, le problème sera anticipé en ramenant le moment cinétique à des valeurs voulues à l'occasion de chaque maneuvre. Ces valeurs voulues pouvant bien entendu être nulles, mais aussi une valeur définie judicieusement de manière à anticiper l'évolution du moment cinétique entre deux maneuvres sous l'effet de la pression de radiation solaire notamment.

De la demande de brevet Européenne publiée avec la numéro de publication EP 0 937 644, on connait un système de propulsion selon le préambule de la revendication 1.

Notons aussi que le centre de masse du satellite varie au cours de la vie du satellite, notamment en raison de la consommation progressive du carburant embarqué. Dans les systèmes connus, des algorithmes sont mis en oeuvre pour la gestion combinée du contrôle d'attitude et du contrôle d'orbite, et pour permettre de prendre en compte la position du centre de masse CM tout au long de la vie du satellite.

On comprend donc l'enjeu de pouvoir disposer de systèmes de propulsion efficaces. Les solutions actuelles, qui mettent en oeuvre des propulseurs de nature différentes en divers emplacements du satellite sont relativement complexes, honéreuses et présentent une masse élevée qui limite la capacité d'embarquement du satellite.

L'invention vise à proposer une solution alternative pour le controle de l'orbite et la réalisation des couples à exercer sur le satellite pendant les maneuvres en palliant les difficultés de mise en oeuvre citées ci-dessus.

A cet effet, l'invention a pour objet un système de propulsion pour le contrôle d'orbite d'un satellite à orbite terrestre animé d'une vitesse de déplacement selon un axe V tangentiel à l'orbite, le système comprend deux ensembles de propulsion, fixés au satellite, et en regard l'un de l'autre par rapport au plan de l'orbite ; chacun des ensembles de propulsion comprenant deux modules de propulsion ; chacun des modules de propulsion comprenant successivement :
- une liaison motorisée de rotation autour d'un axe parallèle à l'axe V,
- un bras de déport, et
- une platine supportant un propulseur apte à délivrer une poussée orientée selon un axe perpendiculaire à l'axe V,
les deux modules de propulsion de chaque ensemble de propulsion étant reliés au satellite de part et d'autre et sensiblement à égales distances d'un plan P perpendiculaire à l'axe V passant par un centre de masse CM du satellite.

Avantageusement, chacun des deux modules de propulsion de chacun des deux ensembles de propulsion, comprend un propulseur de redondance disposé sur la platine à proximité dudit propulseur, et de façon à ce que son axe de poussée soit parallèle à celui du dudit propulseur.

Avantageusement, la liaison motorisée de chacun des deux modules de propulsion de chacun des deux ensembles de propulsion permet la rotation de la platine entre :
- une position de stockage, adaptée au lancement du satellite; le bras de déport dudit module de propulsion étant maintenu contre le satellite, et
- une position opérationnelle, adaptée au contrôle d'orbite du satellite, configurée de façon à ce que le plan parallèle à l'axe V contenant l'axe de poussée du propulseur dudit module de propulsion, passe à proximité du centre de masse CM du satellite.

Dans une configuration avantageuse de l'invention, au moins un des deux modules de propulsion d'au moins un des deux ensembles de propulsion, comprend une seconde liaison motorisée de rotation autour d'un axe T perpendiculaire à la fois à l'axe V et à l'axe de poussée du propulseur dudit module de propulsion.

Dans cette configuration, il est envisagé que la seconde liaison motorisée relie la première liaison motorisée au bras de déport dudit module de propulsion. Il est aussi envisagé que la seconde liaison motorisée relie le bras de déport et la platine dudit module de propulsion. Il est encore envisagé que la seconde liaison motorisée est reliée à la platine par l'intermédiaire d'un second bras de déport dudit module de propulsion. Enfin, il est également envisagé que la seconde liaison motorisée relie la première liaison motorisée au satellite.

L'invention porte aussi sur un satellite à orbite terrestre muni d'un système de propulsion ayant les caractéristiques décrites précédemment.

L'invention porte aussi sur un procédé de contrôle d'inclinaison pour un satellite en orbite géostationnaire comprenant un système de propulsion ayant les caractéristiques précédemment décrites, et comprenant des étapes consistant à :
- déplacer chacun des deux modules de propulsion d'un premier ensemble de propulsion, au moyen de leur liaison motorisée, de façon à ce que le plan parallèle à l'axe V contenant l'axe de poussée de leur propulseur, passe à proximité du centre de masse CM du satellite,
- activer simultanément les propulseurs de chacun des deux modules de propulsion dudit premier ensemble de propulsion à proximité d'un premier noeud orbital,
- déplacer chacun des deux modules de propulsion du second ensemble de propulsion, au moyen de leur liaison motorisée, de façon à ce que le plan parallèle à l'axe V contenant l'axe de poussée de leur propulseur, passe à proximité du centre de masse CM du satellite,
- activer simultanément les propulseurs de chacun des deux modules de propulsion dudit second ensemble de propulsion à proximité d'un second noeud orbital, opposé au premier noeud orbital.

L'invention porte aussi sur un procédé de transfert d'orbite pour un satellite comprenant un système de propulsion ayant les caractéristiques précédemment décrites, et comprenant des étapes consistant à :
- pour chacun des deux modules de propulsion de chacun des deux ensembles de propulsion, orienter le propulseur au moyen de la liaison motorisée, de façon à ce que son axe de poussée soit parallèle au plan de l'orbite,
- activer simultanément les propulseurs des deux modules de propulsion des deux ensembles de propulsion.

L'invention porte également sur un procédé de contrôle de moment cinétique d'un satellite comprenant un dispositif d'accumulation de moment cinétique et un système de propulsion ayant les caractéristiques précédemment décrites, caractérisé en ce qu'il comprend des étapes consistant à :
- orienter les propulseurs des deux modules de propulsion d'au moins un ensemble de propulsion au moyen de leur liaison motorisée dans une même position angulaire.
- activer simultanément les deux propulseurs ainsi orientés, de manière à générer sur le satellite un couple autour de l'axe V.

L'invention porte aussi sur un procédé de contrôle de moment cinétique d'un satellite comprenant un dispositif d'accumulation de moment cinétique et un système de propulsion ayant les caractéristiques précédemment décrites, caractérisé en ce qu'il comprend des étapes consistant à :
- orienter les propulseurs des deux modules de propulsion d'au moins un ensemble de propulsion au moyen de leur liaison motorisée dans une même position angulaire,
- activer les deux propulseurs ainsi orientés de manière différentielle, en intensité ou en durée, de manière à générer sur le satellite un couple autour d'un axe T perpendiculaire à la fois à l'axe V et aux deux axes de poussée des deux propulseurs.

L'invention porte aussi sur un procédé de contrôle de moment cinétique d'un satellite comprenant un dispositif d'accumulation de moment cinétique et un système de propulsion ayant les caractéristiques précédemment décrites, caractérisé en ce qu'il comprend des étapes consistant à :
- orienter les propulseurs des deux modules de propulsion d'au moins un ensemble de propulsion au moyen de leur liaison motorisée dans une position angulaire sensiblement distincte,
- activer les deux propulseurs ainsi orientés de manière à générer sur le satellite un couple autour d'un axe sensiblement parallèle aux axes de poussée des deux propulseurs.

Enfin, l'invention porte sur un procédé de contrôle du mouvement dans le plan de l'orbite pour un satellite en orbite géostationnaire comprenant un système de propulsion ayant les caractéristiques précédemment décrites, caractérisé en ce qu'il comprend des étapes consistant à :
- orienter l'au moins un des deux modules de propulsion d'au moins un des deux ensembles de propulsion qui comprend une seconde liaison motorisée,
- activer le propulseur dudit module de propulsion comprenant la seconde liaison motorisée, de manière à générer sur le satellite une force présentant une composante non nulle selon l'axe V.

L'invention sera mieux comprise et d'autres avantages apparaîtront à la lecture de la description détaillée des modes de réalisation donnés à titre d'exemple sur les figures suivantes.
La figure 1, déjà présentée, représente un satellite géostationnaire en orbite autour de la terre,
la figure 2, déjà présentée, représente une architecture courante d'un satellite comprenant une structure sur laquelle sont fixés divers dispositifs utiles au pilotage du satellite et à sa mission,
les figures 3a, 3b et 3c, déjà présentées, illustrent le principe du contrôle d'orbite pour un satellite selon l'état connu de la technique,
les figures 4a et 4b représentent un premier mode de réalisation du système de propulsion respectivement en position de stockage et en position opérationnelle,
les figures 5a, 5b et 5c, représentent un second mode de réalisation du système de propulsion en position opérationnelle.

Par souci de clarté, les mêmes éléments porteront les mêmes repères dans les différentes figures.

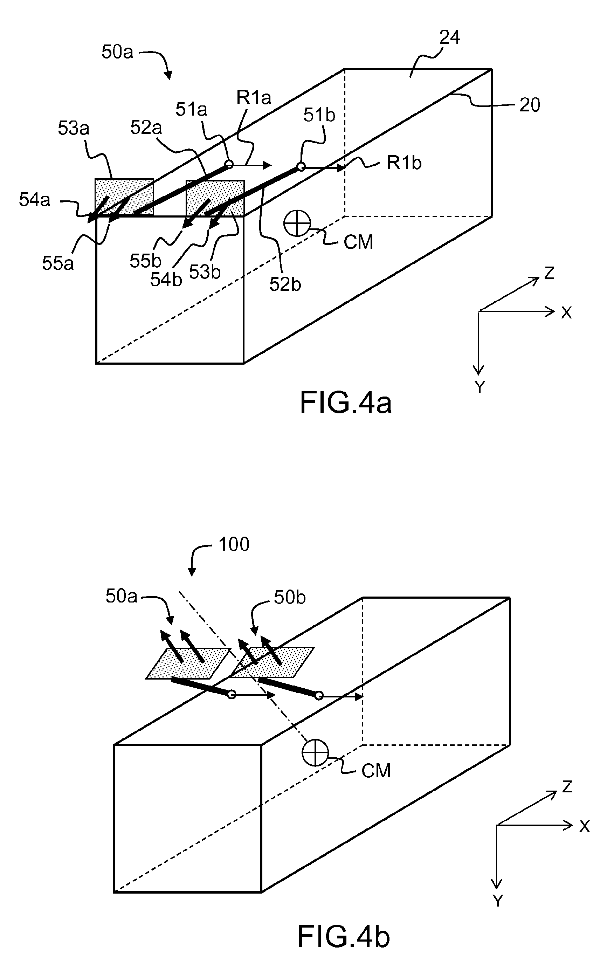

Les figures 4a et 4b représentent un premier mode de réalisation du système de propulsion respectivement en position de stockage et en position opérationnelle. Comme précédemment décrit, un satellite 10 en orbite 11 est stabilisé sur trois axes d'un trièdre de référence lié au satellite au moyen d'un système de contrôle d'attitude. Le trièdre de référence comprend un axe Z orienté vers la terre, un axe Y perpendiculaire à l'obite et orienté dans le sens opposé au moment cinétique de la rotation orbitale, et un axe X formant avec les axes Y et Z un repère orthogonal direct. Pour une orbite circulaire, l'axe X se trouve alors orienté dans la direction de la vitesse du satellite en orbite 11 autour de la terre 12. Le satellite 10 comprend une structure parallélépipédique 20 dont deux faces 22 et 23, dites face terre et face anti-terre, sont perpendiculaires à l'axe Z et orientées respectivement vers la terre et vers une direction opposée à la terre, et deux faces adjacentes opposées 24 et 25, dite face nord et face sud, sont perpendiculaires à l'axe Y et orientées respectivement vers le nord et le sud dans le champ magnétique terrestre. On note aussi un centre de masse CM du satellite, dont la position varie légèrement au cours de la vie du satellite, et situé à l'intérieur de la structure 20.

Pour des raisons de clarté, la description de l'invention s'appuie sur le repère formé par les axes X, Y et Z et sur un satellite dont la structure 20 est parallélépipédique. L'invention ne se limite en aucune manière à un satellite dont la structure 20 est parallélépipédique, ni à un satellite stabilisé sur les trois axes X, Y et Z. Elle s'étend d'une manière générale à tout satellite 10 à orbite terrestre 11 disposant d'une capacité d'accumulation de moment cinétique, animé d'une vitesse de déplacement tangentielle à l'orbite terrestre 11. Dans la suite, l'axe de la vitesse est référencé axe V ; il est confondu avec l'axe X dans le cas particulier représenté sur les figures d'un satellite en orbite circulaire.

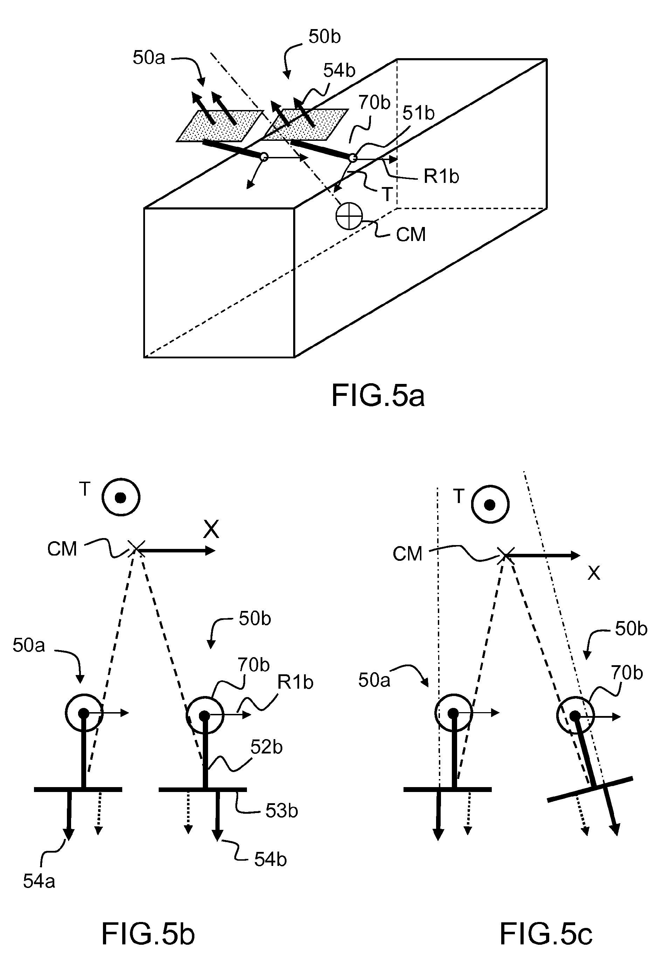

Dans le premier mode de réalisation, le système de propulsion comprend deux ensembles de propulsion fixés au satellite, et en regard l'un de l'autre par rapport au plan de l'orbite 11. Dans le cas d'un satellite conventionnel à structure parallélépipédique, les deux ensembles de propulsion sont disposés respectivement sur les faces nord 24 et sud 25. Pour une meilleure lisibilité, les figures 4a, 4b et 5a représentent un seul ensemble de propulsion 100 fixé au satellite sur la face nord 24. Il est entendu néanmoins que le système de propulsion selon l'invention comprend deux ensembles de propulsion en regard l'un de l'autre par rapport au plan de l'orbite 11.

Chacun des ensembles de propulsion comprend deux modules de propulsion, respectivement 50a et 50b. Chacun des modules de propulsion, respectivement 50a et 50b, comprend successivement :
- une liaison motorisée, respectivement 51 a et 51 b, de rotation autour d'un axe, respectivement R1 a et R1 b, parallèle à l'axe V,
- un bras de déport, respectivement 52a et 52b, et
- une platine, respectivement 53a et 53b, supportant un propulseur, respectivement 54a et 54b, apte à délivrer une poussée orientée selon un axe perpendiculaire à l'axe V.

Les modules de propulsion 50a et 50b présentent donc une architecture identique, ils se différencient par leur implantation sur le satellite. Les deux modules de propulsion de chaque ensemble de propulsion sont reliés au satellite, sur la face nord 24, de part et d'autre et sensiblement à égales distances d'un plan P perpendiculaire à l'axe V passant par le centre de masse CM du satellite.

Avantageusement, chaque module de propulsion, respectivement 50a et 50b, comprend également un propulseur de redondance, respectivement 55a et 55b, disposé sur la platine, respectivement 53a et 53b, à proximité du propulseur principal, respectivement 54a et 54b. Ce propulseur de redondance, respectivement 55a et 55b, est orienté sur la platine de façon à ce que son axe de poussée soit parallèle à l'axe de poussée dudit propulseur principal, respectivement 54a et 54b.

Avantageusement, le propulseur principal et le propulseur de redondance de chacun des modules de propulsion sont positionnés en ligne selon l'axe de la vitesse comme représenté sur les figures 4a et 4b. Il est également envisagé de disposer les deux propulseurs de redondance entre les deux propulseurs principaux, et à égales distance du plan P précédemment défini.

Comme nous l'avons mentionné, le système de propulsion selon l'invention comprend deux ensembles de propulsion dont l'architecture identique, comprend les composants décrits ci-dessus. Ainsi, chacun des deux modules de propulsion de l'ensemble de propulsion 100 est disposé en regard par rapport au plan de l'orbite, d'un module de propulsion identique du second ensemble de propulsion (non représenté).

La figure 4a représente l'ensemble de propulsion 100 dans une position de stockage adaptée au lancement du satellite. Dans cette position, chacun des deux modules de propulsion, respectivement 50a et 50b, est en position de stockage ; le bras de déport, respectivement 53a et 53b est maintenu contre le satellite, contre la face nord de la structure du satellite sur la figure. Ainsi configuré, le système de propulsion présente un encombrement limité. Il est avantageux d'orienter les axes de poussée des propulseurs de chacun des modules de propulsion de manière à ce que, en position de stockage, ils soient parallèles à l'axe Z. Ainsi configuré, la position de stockage est adaptée au transfert d'orbite, l'allumage simultané des propulseurs des deux ensembles de propulsion générant une poussée résultante alignée sur l'axe Z. Il est donc envisagé de solliciter le système de propulsion, par allumage simultané des propulseurs principaux et/ou de redondance du système de propulsion, pour réaliser le transfert d'orbite, soit en complément du propulseur PSP soit à la place de ce propulseur PSP.

Dans une configuration alternative non représentée, les propulseurs sont orientés sur leur platine de façon à ce que, en position de stockage, leurs axes de poussée ne sont pas strictement parallèles à l'axe Z mais sont légèrement inclinés en direction du plan de l'orbite. Dans cette configuration, il est envisagé, au préalable du transfert d'orbite, de déplacer les propulseurs au moyen de la liaison motorisée, vers une position intermédiaire de manière à amener leur axe de poussée parallèlement à l'axe Z.

La figure 4b représente l'ensemble de propulsion 100 dans une position opérationnelle adaptée au contrôle d'orbite. Dans cette position, pour chacun des deux modules de propulsion 50a et 50b, le bras de déport et la platine sont déplacés au moyen de la liaison motorisée de façon à ce que le plan parallèle à l'axe V contenant l'axe de poussée du propulseur dudit module de propulsion, passe à proximité du centre de masse CM du satellite.

Ainsi, l'allumage simultané des propulseurs 54a et 54b des deux modules de propulsion 50a et 50b, résulte en une poussée sur le centre de masse CM, ayant une composante significative selon l'axe Y. On comprend ici un intérêt de la présente invention pour le contrôle d'inclinaison dans le cas où le centre de masse CM du satellite est éloigné de la face anti-terre 23. En effet, les systèmes connus qui disposent de propulseurs à proximité de la face anti-terre génèrent une poussée ne présentant qu'une faible composante selon l'axe Y. Il en résulte une faible efficacité du contrôle d'inclinaison. L'ensemble de propulsion selon l'invention permet, par le déplacement des propulseurs déportés sur la platine, et au moyen de la liaison motorisée fixée à distance de la face anti-terre, de générer une poussée ayant une composante selon l'axe Y significativement plus importante. Il en résulte une meilleure efficacité du contrôle d'inclinaison, la quantité de carburant consommé inutilement par la composante selon l'axe X étant réduite. Typiquement, on envisage de positionner la liaison motorisée 51 a à proximité du milieu de la face nord selon l'axe Z.

Lors de la conception, il convient toutefois de tenir compte de contraintes imposées par les autres constituants du satellite. A titre d'exemple, un module de propulsion trop volumineux, ou positionné trop près des générateurs solaires est susceptible de réduire l'efficacité des générateurs solaires par ombrage, lors du transfert d'orbite ou lors du maintien à poste. En outre, l'allumage des propulseurs peut entrainer une érosion ou une contamination des équipements (réflecteurs d'antennes, générateurs solaires) s'ils sont disposés trop près de ces équipements.

Avantageusement, le système de propulsion permet également le contrôle du couple autour de trois axes. Typiquement, l'allumage simultané des deux propulseurs orientés légèrement hors du centre de masse CM, génèrent en plus de l'incrément de vitesse du satellite un couple de roulis autour de l'axe X. Dans cette position où les deux modules de propulsion présentent une même orientation autour de leur axe de rotation, un allumage différentiel, en intensité ou en durée, des deux propulseurs 54a et 54b, génèrent en plus de l'incrément de vitesse du satellite un couple autour d'un axe T perpendiculaire à la fois l'axe V et aux axes de poussée des propulseurs. Enfin, l'ensemble de propulsion 100 selon l'invention permet avantageusement de découpler l'orientation de chacun des deux modules de propulsion 50a et 50 autour de leur axe de rotation. Ainsi, partant de la position opérationnelle précédemment décrite, une réorientation d'amplitude limitée de chacun des modules de propulsion 50a et 50b par rotation en sens opposé autour de leur axe de rotation, permet de générer un couple autour d'un troisième axe, perpendiculaire à la fois à l'axe T et à l'axe V.

On comprend donc un intérêt de la présente invention qui permet au moyen d'un système simple et peu coûteux d'assurer à la fois le contrôle d'inclinaison en nord sud et le contrôle du couple selon trois axes.

Les figures 5a, 5b et 5c, représentent un second mode de réalisation du système de propulsion en position opérationnelle. Comme précédemment, les figures ne représentent qu'un seul ensemble de propulsion mais le système de propulsion selon ce second mode de réalisation comprend deux ensembles de propulsion en regard l'un de l'autre par rapport au plan de l'orbite.

Dans ce second mode de réalisation, l'ensemble de propulsion comprend deux modules de propulsion 50a et 50b présentant les mêmes caractéristiques que précédemment décrit. Ces caractéristiques ne sont pas reprises en détail ici. Ce mode de réalisation se différencie du premier mode de réalisation par l'ajout d'un degré de liberté en rotation à au moins un module de propulsion d'un ensemble de propulsion. Bien entendu, l'ajout d'un degré de liberté en rotation à un ou plusieurs autres modules de propulsion, du même ensemble de propulsion ou de l'ensemble de propulsion opposé, est également envisagé, notamment pour améliorer la robustesse du système de propulsion aux pannes éventuelles.

Sur les figures 5a, 5b et 5c, un degré de liberté supplémentaire est ajouté au module de propulsion 50b. Ainsi ce module de propulsion 50b comprend une seconde liaison motorisée 70b de rotation autour d'un axe T perpendiculaire à la fois à l'axe V et à l'axe de poussée du propulseur 54b du module de propulsion 50b. Sur les figures, cette seconde liaison motorisée est directement reliée à la première liaison motorisée, ou autrement dit la liaison motorisée 51a peut être assimilée à une liaison deux axes, de type liaison cardan par exemple. Ce mode de réalisation n'est toutefois pas limitatif de la présente invention et il est également envisagé de disposer cette seconde liaison entre le bras de déport 52b et la platine 53b ; ou de disposer la seconde liaison 70b entre le bras de déport 52b et un second bras de déport lui-même relié à la platine 53b ; ou encore de disposer la seconde liaison motorisée 70b entre la première liaison motorisée 51 b et le satellite 10.

L'intérêt de ce second mode de réalisation est illustré par les figures 5b et 5c. La figure 5b représente les deux modules de propulsion 50a et 50b en position opérationnelle. Le plan contenant les axes de poussée des propulseurs 54a et 54b des deux modules de propulsion 50a et 50b passe par le centre de masse CM du satellite. La seconde liaison motorisée 70b du module de propulsion 50b est dans une position centrée ; l'axe de poussée étant aligné sur l'axe Z (comme c'est le cas représenté sur la figure 5a). Dans cette vue, le module de propulsion est représenté dans le plan contenant les axes de poussée des propulseurs. Ce plan est perpendiculaire à l'axe T de rotation de la seconde liaison motorisée 70b, il contient les axes de rotation R1a et R1b, des premières liaisons motorisées 51a et 51 b des modules de propulsion 50a et 50b. Dans cette position centrée de la seconde liaison motorisée 70b, le comportement de l'ensemble de propulsion est identique à celui décrit pour le premier mode de réalisation de l'invention. Typiquement, l'allumage simultané des deux propulseurs alignés sur le centre de masse permet un incrément de vitesse présentant une composante importante selon l'axe Y. L'allumage simultané des propulseurs légèrement décalé par rapport au centre de masse permet de générer un couple en X en plus de l'incrément de vitesse. L'allumage différentiel des propulseurs permet de générer un second couple autour de l'axe T. L'allumage des propulseurs préalablement décalés l'un de l'autre au moyen de la première liaison motorisée (51 a, 51 b) permet de générer un couple autour d'un troisième axe.

La figure 5c représente les deux modules de propulsion 50a et 50b selon la même vue dans le plan contenant les axes de poussée des propulseurs, mais ici la platine 53b et le propulseur 54b du module de propulsion 50b ont été déplacés par rotation autour de l'axe T, au moyen de la seconde liaison motorisée 70a. Dans cette position, l'allumage simultané des propulseurs 54a et 55a permet de générer une force présentant une composante selon l'axe V de la vitesse, en plus de ses autres composantes. De même, en ajustant un allumage différentiel des deux propulseurs 54a et 55a, en intensité ou en durée, il est possible de conserver cette composante de force selon l'axe de la vitesse tout en maitrisant le couple généré autour de l'axe T. On comprend ici l'intérêt de cette configuration. L'ajout de la seconde liaison motorisée 70b sur l'un des modules de propulsion, offrant un nouveau degré de liberté en rotation autour de T, permet le contrôle d'orbite selon l'axe de la vitesse, autrement dit le maintien à poste en est-ouest.

L'invention porte également sur un satellite à orbite terrestre muni d'un système de propulsion ayant les caractéristiques précédemment décrites.

L'invention porte aussi sur un procédé de contrôle d'inclinaison pour un satellite en orbite géostationnaire comprenant un système de propulsion ayant les caractéristiques précédemment décrites, et comprenant des étapes consistant à :
- déplacer chacun des deux modules de propulsion d'un premier ensemble de propulsion, au moyen de leur liaison motorisée, de façon à ce que le plan parallèle à l'axe V contenant l'axe de poussée de leur propulseur, passe à proximité du centre de masse CM du satellite,
- activer simultanément les propulseurs de chacun des deux modules de propulsion dudit premier ensemble de propulsion à proximité d'un premier noeud orbital,
- déplacer chacun des deux modules de propulsion du second ensemble de propulsion, au moyen de leur liaison motorisée, de façon à ce que le plan parallèle à l'axe V contenant l'axe de poussée de leur propulseur, passe à proximité du centre de masse CM du satellite,
- activer simultanément les propulseurs de chacun des deux modules de propulsion dudit second ensemble de propulsion à proximité d'un second noeud orbital, opposé au premier noeud orbital.

L'invention porte aussi sur un procédé de transfert d'orbite pour un satellite comprenant un système de propulsion ayant les caractéristiques précédemment décrites, et comprenant des étapes consistant à :
- pour chacun des deux modules de propulsion de chacun des deux ensembles de propulsion, orienter le propulseur au moyen de la liaison motorisée, de façon à ce que son axe de poussée soit parallèle au plan de l'orbite,
- activer simultanément les propulseurs des deux modules de propulsion des deux ensembles de propulsion.

L'invention porte également sur un procédé de contrôle de moment cinétique d'un satellite comprenant un dispositif d'accumulation de moment cinétique et un système de propulsion ayant les caractéristiques précédemment décrites, caractérisé en ce qu'il comprend des étapes consistant à :
- orienter les propulseurs des deux modules de propulsion d'au moins un ensemble de propulsion au moyen de leur liaison motorisée dans une même position angulaire.
- activer simultanément les deux propulseurs ainsi orientés, de manière à générer sur le satellite un couple autour de l'axe V.

L'invention porte aussi sur un procédé de contrôle de moment cinétique d'un satellite comprenant un dispositif d'accumulation de moment cinétique et un système de propulsion ayant les caractéristiques précédemment décrites, caractérisé en ce qu'il comprend des étapes consistant à :
- orienter les propulseurs des deux modules de propulsion d'au moins un ensemble de propulsion au moyen de leur liaison motorisée dans une même position angulaire,
- activer les deux propulseurs ainsi orientés de manière différentielle, en intensité ou en durée, de manière à générer sur le satellite un couple autour d'un axe T perpendiculaire à la fois à l'axe V et aux deux axes de poussée des deux propulseurs.

L'invention porte aussi sur un procédé de contrôle du mouvement dans le plan de l'orbite pour un satellite en orbite géostationnaire comprenant un système de propulsion ayant les caractéristiques précédemment décrites, caractérisé en ce qu'il comprend des étapes consistant à :
- orienter au moins l'un des deux modules de propulsion d'au moins un des deux ensembles de propulsion qui comprend une seconde liaison motorisée,
- activer le propulseur dudit module de propulsion comprenant la seconde liaison motorisée, de manière à générer sur le satellite une force présentant une composante non nulle selon l'axe V.

Enfin, l'invention porte sur un procédé de contrôle de moment cinétique d'un satellite comprenant un dispositif d'accumulation de moment cinétique et un système de propulsion ayant les caractéristiques précédemment décrites, caractérisé en ce qu'il comprend des étapes consistant à :
- orienter les propulseurs des deux modules de propulsion d'au moins un ensemble de propulsion au moyen de leur liaison motorisée dans une position angulaire sensiblement distincte,
- activer les deux propulseurs ainsi orientés de manière à générer sur le satellite un couple autour d'un axe sensiblement parallèle aux axes de poussée des deux propulseurs.

## Revendications

1. Système de propulsion pour le contrôle d'orbite d'un satellite (10) à orbite terrestre (11) animé d'une vitesse de déplacement selon un axe V tangentiel à l'orbite (11),
le système de propulsion comprenant deux ensembles de propulsion (50a ; 50b), fixés au satellite (10), et en regard l'un de l'autre par rapport au plan de l'orbite (11),
**caractérisé en ce que** chacun des ensembles de propulsion comprend deux modules de propulsion ;
chacun des modules de propulsion (50a) comprenant successivement :
- une liaison motorisée (51 a) de rotation autour d'un axe (R1 a) parallèle à l'axe V,
- un bras de déport (52a), et
- une platine (53a) supportant un propulseur (54a) apte à délivrer une poussée orientée selon un axe perpendiculaire à l'axe V,
les deux modules de propulsion de chaque ensemble de propulsion étant reliés au satellite de part et d'autre et sensiblement à égales distances d'un plan P perpendiculaire à l'axe V passant par un centre de masse CM du satellite (10).

2. Système de propulsion selon la revendication 1, dans lequel chacun des deux modules de propulsion (54a, 55a) de chacun des deux ensembles de propulsion (50a), comprend un propulseur de redondance (56a ; 57a) disposé sur la platine (53a) à proximité dudit propulseur (54a ; 55a), et de façon à ce que son axe de poussée soit parallèle à celui du dudit propulseur.

3. Système de propulsion selon la revendication 1 ou 2, dans lequel la liaison motorisée (51 a) de chacun des deux modules de propulsion (50a) de chacun des deux ensembles de propulsion (100) permet la rotation de la platine (53a) entre :
- une position de stockage, adaptée au lancement du satellite (10); le bras de déport (52a) dudit module de propulsion (50a) étant maintenu contre le satellite (10), et
- une position opérationnelle, adaptée au contrôle d'orbite du satellite (10), configurée de façon à ce que le plan parallèle à l'axe V contenant l'axe de poussée du propulseur (54a) dudit module de propulsion (50a), passe à proximité du centre de masse CM du satellite.

4. Système de propulsion selon l'une des revendications précédentes, dans lequel au moins un des deux modules de propulsion (50b) d'au moins un des deux ensembles de propulsion (100), comprend une seconde liaison motorisée (70b) de rotation autour d'un axe T perpendiculaire à la fois à l'axe V et à l'axe de poussée du propulseur (54b) dudit module de propulsion (50b).

5. Système de propulsion selon la revendication 4, dans lequel la seconde liaison motorisée (70b) relie la première liaison motorisée (51 b) au bras de déport (52b) dudit module de propulsion (50b).

6. Système de propulsion selon la revendication 4, dans lequel la seconde liaison motorisée (70b) relie le bras de déport (52b) et la platine (53b) dudit module de propulsion (50b).

7. Système selon la revendication 6, dans lequel la seconde liaison motorisée (70b) est reliée à la platine (53b) par l'intermédiaire d'un second bras de déport dudit module de propulsion (50b).

8. Système selon la revendication 4, dans lequel la seconde liaison motorisée (70b) relie la première liaison motorisée (51 b) au satellite (10).

9. Satellite à orbite terrestre muni d'un système de propulsion selon l'une des revendications 1 à 8.

10. Procédé de contrôle d'inclinaison pour un satellite en orbite géostationnaire comprenant un système de propulsion selon l'une des revendications 1 à 8, **caractérisé en ce qu'**il comprend des étapes consistant à:
- déplacer chacun des deux modules de propulsion (50a, 50b) d'un premier ensemble de propulsion (100), au moyen de leur liaison motorisée (51 a, 51 b), de façon à ce que le plan parallèle à l'axe V contenant l'axe de poussée de leur propulseur (54a, 54b), passe à proximité du centre de masse CM du satellite,
- activer simultanément les propulseurs (54a, 54b) de chacun des deux modules de propulsion (50a, 50b) dudit premier ensemble de propulsion (100) à proximité d'un premier noeud orbital (15),
- déplacer chacun des deux modules de propulsion du second ensemble de propulsion, au moyen de leur liaison motorisée, de façon à ce que le plan parallèle à l'axe V contenant l'axe de poussée de leur propulseur, passe à proximité du centre de masse CM du satellite,
- activer simultanément les propulseurs de chacun des deux modules de propulsion dudit second ensemble de propulsion (50b) à proximité d'un second noeud orbital (16), opposé au premier noeud orbital (15).

11. Procédé de transfert d'orbite pour un satellite comprenant un système de propulsion selon l'une des revendications 1 à 8, **caractérisé en ce qu'**il comprend des étapes consistant à :
- pour chacun des deux modules de propulsion (50a) de chacun des deux ensembles de propulsion (100), orienter le propulseur (54a) au moyen de la liaison motorisée (51 a), de façon à ce que son axe de poussée soit parallèle au plan de l'orbite,
- activer simultanément les propulseurs (54a) des deux modules de propulsion (50a) des deux ensembles de propulsion (100).

12. Procédé de contrôle de moment cinétique d'un satellite comprenant un dispositif d'accumulation de moment cinétique et un système de propulsion selon l'une des revendications 1 à 8, **caractérisé en ce qu'**il comprend des étapes consistant à :
- orienter les propulseurs (54a, 54b) des deux modules de propulsion (50a, 50b) d'au moins un ensemble de propulsion (100) au moyen de leur liaison motorisée (51 a) dans une même position angulaire,
- activer simultanément les deux propulseurs (54a, 54b) ainsi orientés, de manière à générer sur le satellite un couple autour de l'axe V.

13. Procédé de contrôle de moment cinétique d'un satellite comprenant un dispositif d'accumulation de moment cinétique et un système de propulsion selon l'une des revendications 1 à 8, **caractérisé en ce qu'**il comprend des étapes consistant à :
- orienter les propulseurs (54a, 54b) des deux modules de propulsion (50a, 50b) d'au moins un ensemble de propulsion (100) au moyen de leur liaison motorisée (51 a) dans une même position angulaire,
- activer les deux propulseurs (54a, 54b) ainsi orientés de manière différentielle, en intensité ou en durée, de manière à générer sur le satellite un couple autour d'un axe T perpendiculaire à la fois à l'axe V et aux deux axes de poussée des deux propulseurs (54a , 54b).

14. Procédé de contrôle du mouvement dans le plan de l'orbite pour un satellite en orbite géostationnaire comprenant un système de propulsion selon l'une des revendications 4 à 8, **caractérisé en ce qu'**il comprend des étapes consistant à :
- orienter au moins l'un des deux modules de propulsion (50b) d'au moins un des deux ensembles de propulsion (100) qui comprend une seconde liaison motorisée (70b),
- activer le propulseur (54b) dudit module de propulsion (50b) comprenant la seconde liaison motorisée (70b), de manière à générer sur le satellite une force présentant une composante non nulle selon l'axe V.

15. Procédé de contrôle de moment cinétique d'un satellite comprenant un dispositif d'accumulation de moment cinétique et un système de propulsion selon l'une des revendications 1 à 8, **caractérisé en ce qu'**il comprend des étapes consistant à :
- orienter les propulseurs (54a, 54b) des deux modules de propulsion (50a, 50b) d'au moins un ensemble de propulsion (100) au moyen de leur liaison motorisée (51 a) dans une position angulaire sensiblement distincte,
- activer les deux propulseurs (54a, 54b) ainsi orientés de manière à générer sur le satellite un couple autour d'un axe sensiblement parallèle aux axes de poussée des deux propulseurs (54a, 54b).

## Patentansprüche

1. Antriebssystem zum Steuern der Umlaufbahn eines Satelliten (10) in einer Erdumlaufbahn (11), der sich mit einer Bewegungsgeschwindigkeit entlang einer Achse V tangential zur Umlaufbahn (11) bewegt,
wobei das Antriebssystem zwei am Satelliten (10) angebrachte Antriebsbaugruppen (50a; 50b) umfasst, die einander mit Bezug auf die Ebene der Umlaufbahn (11) zugewandt sind,
**dadurch gekennzeichnet, dass** jede der Antriebsbaugruppen zwei Antriebsmodule umfasst,
wobei jedes Antriebsmodul (50a) sukzessiv Folgendes umfasst:
- eine motorisierte Drehverbindung (51a) um eine Achse (R1a) parallel zur Achse V;
- einen Verschiebungsarm (52a); und
- eine Platte (53a), die ein Triebwerk (54a) trägt, das einen entlang einer Achse senkrecht zur Achse V orientierten Schub liefern kann,
wobei die beiden Antriebsmodule jeder Antriebsbaugruppe mit dem Satelliten auf beiden Seiten verbunden sind und im Wesentlichen den gleichen Abstand von der Ebene P senkrecht zur Achse V haben, die durch einen Massenschwerpunkt CM des Satelliten (10) verläuft.

2. Antriebssystem nach Anspruch 1, wobei jedes der beiden Antriebsmodule (54a, 55a) jeder der beiden Antriebsbaugruppen (50a) ein redundantes Triebwerk (56a; 57a) umfasst, das auf der Platte (53a) in der Nähe des Triebwerks (54a; 55a) angeordnet ist, so dass seine Schubachse parallel zu der des Triebwerks ist.

3. Antriebssystem nach Anspruch 1 oder 2, wobei die motorisierte Verbindung (51a) jedes der beiden Antriebsmodule (50a) jeder der beiden Antriebsbaugruppen (100) eine Rotation der Platte (53a) zulässt zwischen:
- einer verstauten Position, die für den Start des Satelliten (10) ausgelegt ist, in der der Verschiebungsarm (52a) des Antriebsmoduls (50a) gegen den Satelliten (10) gehalten wird; und
- einer Betriebsposition, die zum Steuern der Umlaufbahn des Satelliten (10) ausgelegt ist, so konfiguriert, dass die Ebene parallel zur Achse V, die die Schubachse des Triebwerks (54a) des Antriebsmoduls (50a) enthält, in der Nähe des Massenschwerpunkts CM des Satelliten passiert.

4. Antriebssystem nach einem der vorherigen Ansprüche, wobei wenigstens eines der beiden Antriebsmodule (50b) wenigstens einer der beiden Antriebsbaugruppen (100) eine zweite motorisierte Drehverbindung (70b) um eine Achse T beinhaltet, die senkrecht sowohl zur Achse V als auch zur Schubachse des Triebwerks (54b) des Antriebsmoduls (50b) ist.

5. Antriebssystem nach Anspruch 4, wobei die zweite motorisierte Verbindung (70b) die erste motorisierte Verbindung (51b) mit dem Verschiebungsarm (52b) des Antriebsmoduls (50b) verbindet.

6. Antriebssystem nach Anspruch 4, wobei die zweite motorisierte Verbindung (70b) den Verschiebungsarm (52b) und die Platte (53b) des Antriebsmoduls (50b) verbindet.

7. System nach Anspruch 6, wobei die zweite motorisierte Verbindung (70b) mit der Platte (53b) mittels eines zweiten Verschiebungsarms des Antriebsmoduls (50b) verbunden ist.

8. System nach Anspruch 4, wobei die zweite motorisierte Verbindung (70b) die erste motorisierte Verbindung (51b) mit dem Satelliten (10) verbindet.

9. Erdumlaufsatellit, der mit einem Antriebssystem nach einem der Ansprüche 1 bis 8 ausgestattet ist.

10. Verfahren zum Steuern der Neigung eines Satelliten in einer geostationären Umlaufbahn, umfassend ein Antriebssystem nach einem der Ansprüche 1 bis 8, **dadurch gekennzeichnet, dass** es die folgenden Schritte beinhaltet:
- Bewegen jedes der beiden Antriebsmodule (50a, 50b) einer ersten Antriebsbaugruppe (100) mittels ihrer motorisierten Verbindung (51a, 51b), so dass die Ebene parallel zur Achse V, die die Schubachse ihres Triebwerks (54a, 54b) enthält, in der Nähe des Massenschwerpunkts CM des Satelliten passiert;
- gleichzeitiges Aktivieren der Triebwerke (54a, 54b) jedes der beiden Antriebsmodule (50a, 50b) der ersten Antriebsbaugruppe (100) in der Nähe eines ersten Orbitalknotens (15);
- Bewegen jedes der beiden Antriebsmodule der zweiten Antriebsbaugruppe mittels ihrer motorisierten Verbindung, so dass die Ebene parallel zu der Achse V, die die Schubachse ihres Triebwerks enthält, in der Nähe des Massenschwerpunkts CM des Satelliten passiert;
- gleichzeitiges Aktivieren der Triebwerke jedes der beiden Antriebsmodule der zweiten Antriebsbaugruppe (50b) in der Nähe eines zweiten Orbitalknotens (16) gegenüber dem ersten Orbitalknoten (15).

11. Umlaufbahntransferverfahren für einen Satelliten, umfassend ein Antriebssystem nach einem der Ansprüche 1 bis 8, **dadurch gekennzeichnet, dass** es die folgenden Schritte beinhaltet:
- Orientieren, für jedes der beiden Antriebsmodule (50a) jeder der beiden Antriebsbaugruppen (100), des Triebwerks (54a) mittels der motorisierten Verbindung (51a), so dass ihre Schubachse parallel zur Ebene der Umlaufbahn ist;
- gleichzeitiges Aktivieren der Triebwerke (54a) der beiden Antriebsmodule (50a) der beiden Antriebsbaugruppen (100).

12. Verfahren zum Steuern des kinetischen Moments eines Satelliten, umfassend eine Vorrichtung zum Akkumulieren von kinetischem Moment und ein Antriebssystem nach einem der Ansprüche 1 bis 8, **dadurch gekennzeichnet, dass** es die folgenden Schritte beinhaltet:
- Orientieren der Triebwerke (54a, 54b) der beiden Antriebsmodule (50a, 50b) wenigstens einer Antriebsbaugruppe (100) mittels ihrer motorisierten Verbindung (51a) in derselben Winkelposition;
- gleichzeitiges Aktivieren der beiden so orientierten Triebwerke (54a, 54b), um auf dem Satelliten ein Drehmoment um die Achse V zu erzeugen.

13. Verfahren zum Steuern des kinetischen Moments eines Satelliten, umfassend eine Vorrichtung zum Akkumulieren von kinetischem Moment und ein Antriebssystem nach einem der Ansprüche 1 bis 8, **dadurch gekennzeichnet, dass** es die folgenden Schritte beinhaltet:
- Orientieren der Triebwerke (54a, 54b) der beiden Antriebsmodule (50a, 50b) wenigstens einer Antriebsbaugruppe (100) mittels ihrer motorisierten Verbindung (51a) in derselben Winkelposition;
- differentielles Aktivieren, nach Intensität oder nach Dauer, der beiden so orientierten Triebwerke (54a, 54b), um auf dem Satelliten ein Drehmoment um eine Achse T zu erzeugen, die senkrecht zur Achse V und zu den beiden Antriebsachsen der beiden Triebwerke (54a, 54b) ist.

14. Verfahren zum Steuern der Bewegung in der Ebene der Umlaufbahn für einen Satelliten in einer geostationären Umlaufbahn, umfassend ein Antriebssystem nach einem der Ansprüche 4 bis 8, **dadurch gekennzeichnet, dass** es die folgenden Schritte beinhaltet:
- Orientieren wenigstens eines der beiden Antriebsmodule (50b) wenigstens einer der beiden Antriebsbaugruppen (100), die eine zweite motorisierte Verbindung (70b) umfasst;
- Aktivieren des Triebwerks (54b) des Antriebsmoduls (50b), umfassend die zweite motorisierte Verbindung (70b), um eine Kraft auf dem Satelliten zu erzeugen, die eine Komponente von ungleich null entlang der Achse V hat.

15. Verfahren zum Steuern des kinetischen Moments eines Satelliten, umfassend eine Vorrichtung zum Akkumulieren eines kinetischen Moments und ein Antriebssystem nach einem der Ansprüche 1 bis 8, **dadurch gekennzeichnet, dass** es die folgenden Schritte beinhaltet:
- Orientieren der Triebwerke (54a, 54b) der beiden Antriebsmodule (50a, 50b) wenigstens einer Antriebsbaugruppe (100) mittels ihrer motorisierten Verbindung (51a) in einer erheblich anderen Winkelposition;
- Aktivieren der beiden so orientierten Triebwerke (54a, 54b), um auf dem Satelliten ein Drehmoment um eine Achse zu erzeugen, die im Wesentlichen parallel zu den Antriebsachsen der beiden Triebwerke (54a, 54b) ist.

## Claims

1. A thrust system for controlling the orbit of a satellite (10) in an earth orbit (11) moving at a movement speed along an axis V tangential to said orbit (11),
said thrust system comprising two thrust assemblies (50a; 50b) attached to said satellite (10) and facing each other relative to the plane of said orbit (11),
**characterised in that** each of said thrust assemblies comprises two thrust modules;
each thrust module (50a) successively comprising:
- a motorised link (51a) for rotating about an axis (R1a) parallel to said axis V;
- a displacement arm (52a); and
- a plate (53a) supporting a thruster (54a) capable of delivering a thrust oriented, along an axis perpendicular to said axis V,
said two thrust modules of each thrust assembly being connected to said satellite on either side and being substantially equidistant from a plane P perpendicular to said axis V passing through a centre of mass CM of said satellite (10).

2. The thrust system according to claim 1, wherein each of said two thrust modules (54a, 55a) of each of said two thrust assemblies (50a) comprises a redundant thruster (56a; 57a) that is disposed on said plate (53a) in the vicinity of said thruster (54a; 55a) and so that its thrust axis is parallel to that of said thruster.

3. The thrust system according to claim 1 or 2, wherein said motorised link (51a) of each of said two thrust modules (50a) of each of said two thrust assemblies (100) allows said plate (53a) to rotate between:
- a stowed position that is adapted for the launch of said satellite (10), with said displacement arm (52a) of said thrust module (50a) being held against said satellite (10); and
- an operational position that is adapted for controlling the orbit of said satellite (10), configured so that the plane parallel to said axis V containing the thrust axis of the thruster (54a) of said thrust module (50a) passes in the vicinity of said centre of mass CM of said satellite.

4. The thrust system according to any one of the preceding claims, wherein at least one of said two thrust modules (50b) of at least one of said two thrust assemblies (100) comprises a second motorised link (70b) for rotating about an axis T that is perpendicular both to said axis V and to the thrust axis of the thruster (54b) of said thrust module (50b).

5. The thrust system according to claim 4, wherein said second motorised link (70b) connects said first motorised link (51b) to said displacement arm (52b) of said thrust module (50b).

6. The thrust system according to claim 4, wherein said second motorised link (70b) connects said displacement arm (52b) and said plate (53b) of said thrust module (50b).

7. The system according to claim 6, wherein said second motorised link (70b) is connected to said plate (53b) by means of a second displacement arm of said thrust module (50b).

8. The system according to claim 4, wherein said second motorised link (70b) connects said first motorised link (51b) to said satellite (10).

9. An earth orbit satellite provided with a thrust system according to any one of claims 1 to 8.

10. A method for controlling the incline of a satellite in a geostationary orbit, comprising a thrust system according to any one of claims 1 to 8, **characterised in that** it comprises the following steps:
- moving each of said two thrust modules (50a, 50b) of a first thrust assembly (100) by means of their motorised link (51a, 51b) so that the plane parallel to said axis V containing the thrust axis of their thruster (54a, 54b) passes in the vicinity of said centre of mass CM of said satellite;
- simultaneously activating the thrusters (54a, 54b) of each of said two thrust modules (50a, 50b) of said first thrust assembly (100) in the vicinity of a first orbital node (15);
- moving each of said two thrust modules of said second thrust assembly by means of their motorised link so that the plane parallel to said axis V containing the thrust axis of their thruster passes in the vicinity of said centre of mass CM of said satellite;
- simultaneously activating the thrusters of each of said two thrust modules of said second thrust assembly (50b) in the vicinity of a second orbital node (16) opposite said first orbital node (15).

11. A method for transferring the orbit of a satellite comprising a thrust system according to any one of claims 1 to 8, **characterised in that** it comprises the following steps:
- orienting, for each of said two thrust modules (50a) of each of said two thrust assemblies (100), said thruster (54a) by means of said motorised link (51a), so that its thrust axis is parallel to the plane of the orbit;
- simultaneously activating said thrusters (54a) of said two thrust modules (50a) of said two thrust assemblies (100).

12. A method for controlling the kinetic moment of a satellite comprising a device for accumulating kinetic moment and a thrust system according to any one of claims 1 to 8, **characterised in that** it comprises the following steps:
- orienting in the same angular position said thrusters (54a, 54b) of said two thrust modules (50a, 50b) of at least one thrust assembly (100) by means of their motorised link (51a);
- simultaneously activating said two thrusters (54a, 54b) thus oriented, so as to generate a torque on said satellite about said axis V.

13. A method for controlling the kinetic moment of a satellite comprising a device for accumulating kinetic moment and a thrust system according to any one of claims 1 to 8, **characterised in that** it comprises the following steps:
- orienting in the same angular position said thrusters (54a, 54b) of said two thrust modules (50a, 50b) of at least one thrust assembly (100) by means of their motorised link (51a);
- differentially activating, by intensity or by duration, said two thrusters (54a, 54b) thus oriented, so as to generate a torque on said satellite about an axis T that is perpendicular both to said axis V and to the two thrust axes of said two thrusters (54a, 54b).

14. A method for controlling movement in the plane of the orbit of a satellite in a geostationary orbit comprising a thrust system according to any one of claims 4 to 8, **characterised in that** it comprises the following steps:
- orienting at least one of said two thrust modules (50b) of at least one of said two thrust assemblies (100) that comprises a second motorised link (70b);
- activating said thruster (54b) of said thrust module (50b) comprising said second motorised link (70b), so as to generate a force on said satellite that has a non-zero component along said axis V.

15. A method for controlling the kinetic moment of a satellite comprising a device for accumulating kinetic moment and a thrust system according to any one of claims 1 to 8, **characterised in that** it comprises the following steps:
- orienting in a substantially distinct angular position said thrusters (54a, 54b) of said two thrust modules (50a, 50b) of at least one thrust assembly (100) by means of their motorised link (51a);
- activating said two thrusters (54a, 54b) thus oriented, so as to generate a torque on said satellite about an axis that is substantially parallel to the thrust axes of said two thrusters (54a, 54b).
